# EUROPÄISCHE PATENTANMELDUNG

(11) **EP 4 651 071 A1**
(43) Veröffentlichungstag der Anmeldung: **19.11.2025**
(21) Anmeldenummer: 24176086.7
(22) Anmeldetag: 15.05.2024
(51) Int. Cl.: G06T 5/60, G06T 5/70, G06T 5/77

(54) **ERZEUGUNG SYNTHETISCHER BILDER FÜR DAS TRAINING VON MACHINE LEARNING-MODELLEN**

(71) Anmelder: Robert Bosch GmbH, 70442 Stuttgart (DE)
(72) Erfinder: Laube, Kevin Alexander, 72108 Rottenburg Wurmlingen (DE); Borges, Julio, 70176 Stuttgart (DE); Cheng, Shin-I, 70190 Stuttgart (DE)

(57) **Zusammenfassung**

Verfahren (100) zum Trainieren eines Diffusionsmodells (1), das dazu nutzbar ist, aus Rauschen (2) in Verbindung mit einer vorgegebenen Konditionierung (3) in iterativer Weise ein synthetisches Bild (4) zu erzeugen, das im Einklang mit dieser Konditionierung (3) steht, mit den Schritten:
• es wird ein Stil (5) vorgegeben (110), den die synthetisch erzeugten Bilder (4) haben sollen;
• es wird eine Menge von Trainings-Bildern *x*₀ bereitgestellt (120), die in unterschiedlichem Maße dem vorgegebenen Stil (5) entsprechen;
• die Trainings-Bilder *x*₀ werden in einer vorgegebenen Anzahl *T* von Iterationen sukzessive mit Rauschen (2) beaufschlagt (130), so dass jeweils verrauschte Versionen *x*₁,...,*x_{T}* entstehen;
• aus den verrauschten Versionen *x*₁,...,*x_{T}* werden Samples *xₜ* gezogen (140);
• die gezogenen Samples *xₜ* werden in Verbindung mit der vorgegebenen Konditionierung (3) von dem Diffusionsmodell (1) zu Vorhersagen *x̂*_{*t*-1} für die jeweils vorherige verrauschte Version *x*_{*t*-1}, verarbeitet (150);
• die Übereinstimmung dieser Vorhersagen *x̂*_{*t*-1} mit den jeweils tatsächlichen verrauschten Versionen *x*_{*t*-1}, wird mit einer vorgegebenen Kostenfunktion (7) bewertet (160); und
• Parameter (1a), die das Verhalten des Diffusionsmodells (1) charakterisieren, werden auf das Ziel optimiert (170), dass bei weiterer Verarbeitung von Trainings-Bildern *x*₀ und hieraus erzeugten Samples *xₜ* die Bewertung (7a) durch die Kostenfunktion verbessert wird,
wobei beim Ziehen (140) der Samples *xₜ,* und/oder bei der Bewertung (160) daraus erzeugter Vorhersagen *x̂*_{*t*-1} durch die Kostenfunktion (7), solche Samples *xₜ,* die den Stil des jeweiligen Trainings-Bildes *x*₀ noch erkennen lassen, umso stärker repräsentiert sind, je mehr das jeweilige Trainings-Bild x₀ dem vorgegebenen Stil (5) entspricht.

## Beschreibung

Die vorliegende Erfindung betrifft die Erzeugung synthetischer Bilder, die als Trainings-Beispiele für Machine Learning-Modelle verwendbar sind und insbesondere eine Knappheit an mit Vorwissen "gelabelten" Trainings-Beispielen lindern können.

### Stand der Technik

Für die Auswertung von Bildern, insbesondere im Rahmen der Umfeldüberwachung von Fahrzeugen oder Robotern beim zumindest teilweise automatisierten Fahren auf Betriebsgeländen oder im öffentlichen Verkehr, werden immer häufiger Machine Learning-Modelle eingesetzt. Diese Modelle haben die vorteilhafte Eigenschaft, dass sie nach dem Training anhand einer begrenzten Menge von Trainings-Beispielen auch auf im Training ungesehene Bilder generalisieren. Damit wird im weitesten Sinne der Lernprozess eines menschlichen Fahrzeugführers nachgebildet, der nach nur wenigen zehn Fahrstunden und weniger als 1000 km Fahrerfahrung eine sehr begrenzte Auswahl der im Verkehr vorkommenden Situationen erlebt hat. In der Regel gelingt es dem Fahrzeugführer nach diesem sehr begrenzten Training trotzdem, auch im Training ungesehene Situationen zu meistern.

Das Training von Machine Learning-Modellen erfolgt vielfach in überwachter Weise. Das heißt, die Trainings-Beispiele sind mit Vorwissen in Form einer Soll-Ausgabe, die das Machine Learning-Modell idealerweise aus dem Trainings-Beispiel erzeugen soll, "gelabelt". Der Trainingsfortschritt wird dann daran gemessen, inwieweit das Machine Learning-Modell zu allen Trainings-Beispielen im Mittel Ausgaben liefert, die im Einklang mit den Soll-Ausgaben stehen.

Das "Labeln" von Trainings-Beispielen ist im Wesentlichen ein manueller Prozess und daher ein großer Treiber für den Zeit- und Kostenaufwand des Trainings.

### Offenbarung der Erfindung

Die Erfindung stellt ein Verfahren zum Trainieren eines Diffusionsmodells bereit. Ein Diffusionsmodell als solches transformiert eine statistische Verteilung, wie etwa normalverteiltes Rauschen, in eine andere Verteilung, etwa die Verteilung realistisch aussehender Bilder. In Verbindung mit einer vorgegebenen Konditionierung, etwa in Form von Text oder einer semantischen Segmentierung, kann mit Hilfe eines Diffusionsmodells in iterativer Weise ein synthetisches Bild erzeugt werden, das im Einklang mit dieser Konditionierung steht. So kann beispielsweise eine textliche Eingabe als Konditionierung vorgegeben werden, um ein synthetisches Bild mit einem vorgegebenen Inhalt zu erzeugen. Insofern kann das Diffusionsmodell also dazu ausgebildet sein, aus Rauschen in Verbindung mit einer vorgegebenen Konditionierung in iterativer Weise ein synthetisches Bild zu erzeugen, das im Einklang mit dieser Konditionierung steht.

Im Rahmen des Verfahrens wird ein Stil vorgegeben, den die synthetisch erzeugten Bilder haben sollen. Es wird eine Menge von Trainings-Bildern *x*₀ bereitgestellt, die in unterschiedlichem Maße dem vorgegebenen Stil entsprechen.

Die Trainings-Bilder *x*₀ werden in einer vorgegebenen Anzahl T von Iterationen sukzessive mit Rauschen beaufschlagt, so dass jeweils verrauschte Versionen *x*₁,...*,x_{T}* entstehen. Aus den verrauschten Versionen *x*₁*,*...,*x_{T}* werden Samples *xₜ* gezogen. Die gezogenen Samples *xₜ* werden in Verbindung mit der vorgegebenen Konditionierung von dem Diffusionsmodell zu Vorhersagen *x̂*_{*t*-1} für die jeweils vorherige verrauschte Version *x*_{*t*-1} verarbeitet.

Die Übereinstimmung dieser Vorhersagen *x̂*_{*t*-1} mit den jeweils tatsächlichen verrauschten Versionen *x*_{*t*-1} wird mit einer vorgegebenen Kostenfunktion bewertet. Parameter, die das Verhalten des Diffusionsmodells charakterisieren, werden auf das Ziel optimiert, dass bei weiterer Verarbeitung von Trainings-Bildern *x*₀ und hieraus erzeugten Samples *xₜ* die Bewertung durch die Kostenfunktion verbessert wird.

Beim Ziehen der Samples *xₜ,* und/oder bei der Bewertung daraus erzeugter Vorhersagen *x̂*_{*f-*1} durch die Kostenfunktion, sind solche Samples *xₜ,* die den Stil des jeweiligen Trainings-Bildes *x*₀ noch erkennen lassen, umso stärker repräsentiert, je mehr das jeweilige Trainings-Bild *x*₀ dem vorgegebenen Stil entspricht.

Es wurde erkannt, dass auf diese Weise
- das Diffusionsmodell dazu trainiert werden kann, synthetisch generierte Bilder zu erzeugen, die dem vorgegebenen Stil entsprechen,
- ohne dass es hierzu erforderlich ist, die Trainings-Beispiele von vornherein auf diesen vorgegebenen Stil einzuschränken.

Das Erzeugen synthetischer Bilder mit einem bestimmten vorgegebenen Stil verbessert die Eignung dieser synthetisch erzeugten Bilder als Trainings-Beispiele für das Training eines Machine Learning-Modells. Für ein solches Training werden in der Regel nicht ausschließlich synthetisch erzeugte Bilder eingesetzt, sondern es wird häufig eine bereits vorhandene begrenzte Menge physisch aufgenommener Trainings-Beispiele mit synthetisch erzeugten Trainings-Beispielen ergänzt. Für ein optimales Training sollten dann die synthetisch erzeugten Trainings-Beispiele der gleichen Domäne und/oder Verteilung angehören wie die physisch aufgenommenen Trainings-Beispiele. Die physisch aufgenommenen Trainings-Beispiele wiederum sind häufig durch bestimmte Eigenheiten der Bildaufnahme gekennzeichnet.

Wenn Bilder beispielsweise mit einer von einem Fahrzeug mitgeführten Kamera aufgenommen werden, sind auf Grund der begrenzten Größe der Kamera die Bilder möglicherweise nicht so perfekt, als wären sie etwa mit einer professionellen Kamera für Spielfilmaufnahmen aufgenommen worden. Synthetisch erzeugte Bilder können nun beispielsweise "zu perfekt" in dem Sinne sein, dass sie qualitativ viel besser sind als dies mit der vom Fahrzeug mitgeführten Kamera realisierbar wäre. Derartige synthetisch erzeugte Bilder gehören somit nicht der Domäne und/oder Verteilung der physisch aufgenommenen Bilder an, sondern erzeugen eine Domänenverschiebung. Mit dem hier vorgeschlagenen Verfahren können hingegen Bilder erzeugt werden, die den bereits vorhandenen physisch aufgenommenen Bildern deutlich ähnlicher sind.

Gleiches gilt, wenn bereits synthetische Bilder aus anderer Quelle erzeugt wurden und dieser Vorrat sinnvoll ergänzt werden soll. Auch Methoden zur synthetischen Erzeugung von Bildern können den Bildern ihren eigenen Stil aufprägen, beispielsweise in Form charakteristischer Artefakte.

Im Prinzip könnte die Beschränkung auf die Erzeugung von Bildern eines bestimmten Stils erzwungen werden, indem die Trainings-Beispiele von vornherein auf solche eingeschränkt werden, die dem vorgegebenen Stil entsprechen. Damit würde ein großer Teil der insgesamt verfügbaren Trainings-Beispiele geopfert. Es wurde jedoch erkannt, dass beim sukzessiven Verrauschen des Trainings-Bildes die Informationen, die sich auf den Stil des Bildes beziehen, schneller unkenntlich werden als Informationen, die sich auf den Inhalt beziehen. Wenn das Rauschen immer mehr zunimmt, ist also noch relativ lange erkennbar, was in dem Bild dargestellt sein soll. Es ist aber beispielsweise relativ schnell nicht mehr erkennbar, mit welcher Kamera das Bild genau aufgenommen wurde.

Daher können beispielsweise für Trainings-Bilder *x*₀, die nicht dem vorgegebenen Stil entsprechen, Iterationen *xₜ* gesampelt werden, deren Verrauschen so weit fortgeschritten ist, dass der Stil hieraus nicht mehr eindeutig rekonstruierbar ist. Hiermit können die wesentlichen Fähigkeiten des Diffusionsmodells zur Rekonstruktion von Inhalten mit einer größeren Variabilität trainiert werden. Iterationen *xₜ* hingegen, aus denen der Stil eindeutig rekonstruierbar ist, können dann nur für solche Trainings-Bilder *x*₀ gesampelt werden, die dem vorgegebenen Stil entsprechen. Wann immer also das Diffusionsmodell ein Stück Stil rekonstruiert, geschieht dies immer nur für Trainings-Bilder *x*₀ des passenden Stils.

Alternativ oder in Kombination hierzu kann der Einfluss von Samples *xₜ,* die den "falschen" Stil noch eindeutig erkennen lassen, auf das Trainingsergebnis des Diffusionsmodells auch in der Kostenfunktion zurückgedrängt werden. Es hängt von der konkreten Anwendung ab, ob eine Modifikation der Kostenfunktion oder eine Modifikation des Samplings einfacher zu realisieren ist.

In einer besonders vorteilhaften Ausgestaltung wird die Menge der Trainings-Bilder *x*₀ in eine Richtig-Teilmenge derjenigen Trainings-Bilder *x*₀, die dem vorgegebenen Stil entsprechen, und eine Falsch-Teilmenge derjenigen Trainings-Bilder *x*₀, die dem vorgegebenen Stil nicht entsprechen, aufgeteilt. Beim Ziehen der Samples *xₜ,* und/oder bei der Bewertung daraus erzeugter Vorhersagen *x̂*_{*t*-1} durch die Kostenfunktion werden Samples *xₜ,* die den Stil des jeweiligen Trainings-Bildes *x*₀ noch erkennen lassen, dann nur berücksichtigt, insoweit sie aus Trainings-Bildern *x*₀ aus der Richtig-Teilmenge hervorgegangen sind. Wie zuvor erläutert, kann auf diese Weise auch der Informationsgehalt der Trainings-Bilder *x*₀ in der Falsch-Teilmenge optimal ausgenutzt werden.

Zu diesem Zweck kann insbesondere beispielsweise ein Schwellwert S festgelegt werden, bis zu dem Samples *xₜ* mit *t* ≤ S den Stil des jeweiligen Trainings-Bildes *x*₀ noch erkennen lassen. Es lässt sich schnell ein Schwellwert S finden, oberhalb dessen auf jeden Fall alle Stil-Information aus den Samples *xₜ* mit *t* > S verschwunden ist. Es ist im Rahmen des Verfahrens auch nicht schlimm, wenn der Schwellwert S zu hoch angesetzt wird. Dies schließt dann lediglich einige Beiträge von Trainings-Bildern *x*₀ der Falsch-Teilmenge aus, ändert aber nichts daran, dass der Stil des erzeugten Bildes wie gewünscht dem vorgegebenen Stil entspricht.

Wenn die Trainings-Bilder *x*₀ beispielsweise in T = 1000 Iterationen verrauscht werden, kann beispielsweise ein Schwellwert von S = 200 Iterationen festgelegt werden, unterhalb dessen die Samples *xₜ* mit *t* ≤ S den Stil des jeweiligen Trainings-Bildes *x*₀ noch erkennen lassen.

Um den Schwellwert S zu optimieren, wird in einer weiteren besonders vorteilhaften Ausgestaltung für mehrere Kandidaten-Schwellwerte *S** getestet, ob sich aus Samples *x*_{*S**} der Stil des jeweiligen Trainings-Bildes *x*₀ noch eindeutig ermitteln lässt. Für diesen Test kann beispielsweise ein Klassifikator verwendet werden, der dazu ausgebildet ist, dem Sample *x*_{*S**} Klassifikations-Scores in Bezug auf einen oder mehrere Stile zuzuordnen. Wenn dann beispielsweise mehreren unterschiedlichen Stilen vergleichbare Klassifikations-Scores zugeordnet werden, ist die Entscheidung für einen Stil nicht mehr eindeutig.

Der vorgegebene Stil kann insbesondere beispielsweise eine Übertragungsfunktion charakterisieren, die den semantischen Inhalt eines Bildes in das Bild übersetzt. Er kann sich also auf den Prozess beziehen, mit dem das jeweilige Bild erzeugt wurde, und insbesondere beispielsweise Spuren beinhalten, die dieser Prozess in den Trainings-Bildern *x*₀ hinterlässt. Dann können mit dem Verfahren besonders gut synthetische Bilder erzeugt werden, die so aussehen, als wären sie mit dem gleichen Prozess erhalten worden wie die Trainings-Bilder *x*₀.

Erst recht gilt dies in einer weiteren besonders vorteilhaften Ausgestaltung, in der der vorgegebene Stil eine Vorrichtung, mit der ein Bild aufgenommen wurde, und/oder einen Algorithmus, mit dem ein Bild *x*₀ synthetisch generiert wurde, charakterisiert. Beispielsweise kann der Stil eine für die Bildaufnahme verwendete Kamera charakterisieren oder auch ein Verfahren zur synthetischen Erzeugung von Bildern grob umreißen.

Diese Definition des Stils unterscheidet sich vom üblichen Sprachgebrauch auf dem Gebiet des Machine Learnings, wonach im Wesentlichen zwischen einem semantischen Inhalt einerseits und dem Stil andererseits differenziert wird. Nach diesem Sprachgebrauch gehören auch beispielsweise Farben oder Materialien von Objekten, Lichtverhältnisse, Tageszeiten und Jahreszeiten zum Stil. Genaugenommen handelt es sich hierbei aber um Elemente eines "semantischen Stils", der eher an Eigenschaften bestimmter Objekte hängt als am Abbildungsprozess insgesamt. Im Kontext des hier vorgeschlagenen Verfahrens geht es vor allem darum, einen Generierungs-Stil von Trainings-Bildern *x*₀ beizubehalten, unabhängig davon, ob diese Generierung durch ein physikalisches Abbildungssystem (etwa eine Kamera) oder durch einen Algorithmus erfolgt ist.

Somit kann der vorgegebene Stil insbesondere beispielsweise
- eine Bildverzerrung, und/oder
- Fokusunschärfe, und/oder
- eine Farbgebung und/oder einen Farbstich, und/oder
- eine oder mehrere Texturen, und/oder
- einen oder mehrere bei der Erzeugung des Trainings-Bildes *x*₀ aufgetretene Artefakte
umfassen.

In einer großen Menge von Trainings-Bildern *x*₀, in der viele Stile gemischt sind, werden nur vergleichsweise wenige Trainings-Bilder *x*₀ dem vorgegebenen Stil entsprechen. Daher ist in Bezug auf die meisten Trainings-Bilder *x*₀ damit zu rechnen, dass die gesampelten verrauschten Versionen *xₜ* auf solche Iterations-Indizes t eingeschränkt werden, bei denen der Stil durch das Verrauschen sicher unkenntlich gemacht worden ist. Dies kann dazu führen, dass in der GesamtMenge der aus allen Trainings-Bildern *x*₀ gezogenen Samples *xₜ* die niedrigeren Iterations-Indizes t, die zu den schwächer verrauschten Versionen gehören, unterrepräsentiert sind. Um dieser Tendenz entgegenzuwirken, wird in einer weiteren besonders vorteilhaften Ausgestaltung
- eine Häufigkeit, mit der solche Samples *xₜ* gezogen werden, die den Stil des jeweiligen Trainings-Bildes *x*₀ noch erkennen lassen, und/oder
- eine Häufigkeit, mit der solche Samples *xₜ* gezogen werden, die auf Trainings-Bilder *x*₀ mit dem vorgegebenen Stil zurückgehen,
so angepasst wird, dass die Iterations-Indizes t der insgesamt gezogenen Samples gemäß einer vorgegebenen Verteilung verteilt sind. Diese vorgegebene Verteilung kann insbesondere beispielsweise eine Gleichverteilung oder eine Normalverteilung sein.

In einer weiteren besonders vorteilhaften Ausgestaltung umfasst die vorgegebene Konditionierung
- eine Zusammensetzung des Trainings-Bildes *x*₀ aus Objekten, und/oder
- Kanten des Trainings-Bildes *x*₀, und/oder
- sonstige Informationen über das Layout des Trainings-Bildes *x*₀.

Auf diese Weise können gezielt Variationen des Trainings-Bildes *x*₀ erzeugt werden, die das gleiche räumliche Layout und/oder den gleichen semantischen Inhalt haben, diese Inhalte aber anders darstellen. Dabei gehören die synthetisch erzeugten Bilder zugleich immer noch der Domäne und/oder Verteilung derjenigen Bilder an, die genauso erzeugt wurden wie das ursprüngliche Trainings-Bild *x*₀. Hiermit eignen sich die synthetisch erzeugten Bilder besonders gut als Trainings-Beispiele für ein Machine Learning-Modell. Insbesondere können beim überwachten Training eines solchen Modells Labels der Trainings-Bilder *x*₀ in Form von Soll-Ausgaben, die das Machine Learning-Modell aus den Trainings-Bildern *x*₀ erzeugen sollte, wiederverwendet werden.

Wenn das Diffusionsmodell fertig trainiert ist, werden in einer weiteren besonders vorteilhaften Ausgestaltung Samples von Rauschen aus einer Rauschverteilung gezogen und in Verbindung mit der vorgegebenen Konditionierung dem trainierten Diffusionsmodell zugeführt. Hierbei entstehen synthetisch generierte Bilder. Gemäß dem hier vorgeschlagenen Verfahren entsprechen die synthetisch erzeugten Bilder dem vorgegebenen Stil.

Wie zuvor erläutert, eignen sich diese synthetisch erzeugten Bilder besonders gut als Trainings-Beispiele für Machine Learning-Modelle. Daher wird in einer weiteren besonders vorteilhaften Ausgestaltung ein Machine Learning-Modell unter Heranziehung der synthetisch generierten Bilder als Trainings-Beispiele trainiert. Insbesondere fügt sich das synthetisch generierte Bild besser in eine Domäne und/oder Verteilung bereits vorhandener Trainings-Beispiele ein. Auf diese Weise ist das synthetisch generierte Trainings-Beispiel eine echte Hilfe für das im Gange befindliche Training und nicht etwa ein Störfaktor, der dieses Training mit einer Domänenverschiebung in eine andere Richtung als geplant zieht. Das Machine Learning-Modell wird in der Regel auf eine bestimmte Aufgabe (Task) trainiert und daher auch als Task-Modell bezeichnet.

In einer weiteren besonders vorteilhaften Ausgestaltung werden dem solchermaßen trainierten Machine Learning-Modell Eingabe-Bilder zugeführt werden, die mit mindestens einem Sensor aufgenommen wurden. Aus der daraufhin vom Machine Learning-Modell gelieferten Ausgabe wird ein Ansteuersignal gebildet. Ein Fahrzeug, ein Fahrassistenzsystem, ein Roboter, ein System zur Qualitätskontrolle, ein System zur Überwachung von Bereichen, und/oder ein System zur medizinischen Bildgebung, wird mit dem Ansteuersignal angesteuert. Auf Grund des verbesserten Trainings ist dann die Wahrscheinlichkeit erhöht, dass die Reaktion des jeweils angesteuerten Systems auf das Ansteuersignal der in den Eingabe-Bildern verkörperten Situation angemessen ist.

Das Verfahren kann insbesondere ganz oder teilweise computerimplementiert sein. Daher bezieht sich die Erfindung auch auf ein Computerprogramm mit maschinenlesbaren Anweisungen, die, wenn sie auf einem oder mehreren Computern und/oder Compute-Instanzen ausgeführt werden, den oder die Computer und/oder Compute-Instanzen dazu veranlassen, das beschriebene Verfahren auszuführen. In diesem Sinne sind auch Steuergeräte für Fahrzeuge und Embedded-Systeme für technische Geräte, die ebenfalls in der Lage sind, maschinenlesbare Anweisungen auszuführen, als Computer anzusehen. Compute-Instanzen können beispielsweise virtuelle Maschinen, Container oder serverlose Ausführungsumgebungen sein, die insbesondere in einer Cloud bereitgestellt werden können.

Ebenso bezieht sich die Erfindung auch auf einen maschinenlesbaren Datenträger und/oder auf ein Downloadprodukt mit dem Computerprogramm. Ein Downloadprodukt ist ein über ein Datennetzwerk übertragbares, d.h. von einem Benutzer des Datennetzwerks downloadbares, digitales Produkt, das beispielsweise in einem Online-Shop zum sofortigen Download feilgeboten werden kann.

Weiterhin können ein oder mehrere Computer und/oder Compute-Instanzen mit dem Computerprogramm, mit dem maschinenlesbaren Datenträger bzw. mit dem Downloadprodukt ausgerüstet sein.

Weitere, die Erfindung verbessernde Maßnahmen werden nachstehend gemeinsam mit der Beschreibung der bevorzugten Ausführungsbeispiele der Erfindung anhand von Figuren näher dargestellt.

### Ausführungsbeispiele

Es zeigt:
Figur 1 Ausführungsbeispiel des Verfahrens 100 zum Trainieren eines Diffusionsmodells 1;
Figur 2 Beispiele für die Wirkung zunehmender Verrauschung auf die Erkennbarkeit des Stils von Bildern;
Figur 3 Schematische Veranschaulichung der Begünstigung schwächer verrauschter Iterationen *xₜ* nur für Trainings-Bilder *x*₀, die dem vorgegebenen Stil 5 entsprechen.

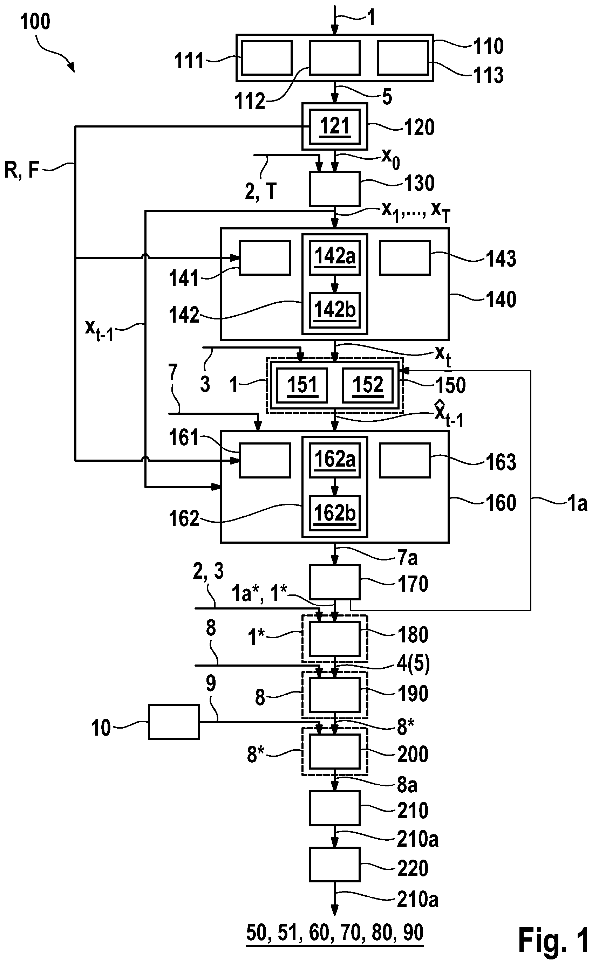

Figur 1 ist ein schematisches Ablaufdiagramm eines Ausführungsbeispiels des Verfahrens 100 zum Trainieren eines Diffusionsmodells 1. Das Diffusionsmodell 1 ist dazu nutzbar, aus Rauschen 2 in Verbindung mit einer vorgegebenen Konditionierung 3 in iterativer Weise ein synthetisches Bild 4 zu erzeugen.

In Schritt 110 wird es wird ein Stil 5 vorgegeben, den die vom fertig trainierten Diffusionsmodell 1 synthetisch erzeugten Bilder 4 haben sollen.

Gemäß Block 111 kann der vorgegebene Stil 5 eine Übertragungsfunktion charakterisieren, die den semantischen Inhalt eines Bildes in das Bild übersetzt.

Gemäß Block 112 kann der vorgegebene Stil 5 eine Vorrichtung, mit der ein Bild aufgenommen wurde, und/oder einen Algorithmus, mit dem ein Bild synthetisch generiert wurde, charakterisieren.

Gemäß Block 113 kann der vorgegebene Stil 5
- eine Bildverzerrung, und/oder
- Fokusunschärfe, und/oder
- eine Farbgebung und/oder einen Farbstich, und/oder
- eine oder mehrere Texturen, und/oder
- einen oder mehrere bei der Erzeugung des Trainings-Bildes *x*₀ aufgetretene Artefakte
umfassen.

In Schritt 120 wird eine Menge von Trainings-Bildern *x*₀ bereitgestellt, die in unterschiedlichem Maße dem vorgegebenen Stil 5 entsprechen.

Gemäß Block 121 kann die Menge der Trainings-Bilder *x*₀ in eine Richtig-Teilmenge R derjenigen Trainings-Bilder *x*₀, die dem vorgegebenen Stil 5 entsprechen, und eine Falsch-Teilmenge F derjenigen Trainings-Bilder *x*₀, die dem vorgegebenen Stil 5 nicht entsprechen, aufgeteilt werden.

In Schritt 130 werden die Trainings-Bilder *x*₀ in einer vorgegebenen Anzahl T von Iterationen sukzessive mit Rauschen 2 beaufschlagt, so dass jeweils verrauschte Versionen *x*₁*,*...,*x_{T}* entstehen.

In Schritt 140 werden aus den verrauschten Versionen *x*₁*,*...,*x_{T}* Samples *xₜ* gezogen.

In Schritt 150 werden die gezogenen Samples *xₜ* in Verbindung mit der vorgegebenen Konditionierung 3 von dem Diffusionsmodell 1 zu Vorhersagen *x̂*_{*t*-1} für die jeweils vorherige verrauschte Version *x*_{*t*-1} verarbeitet.

Gemäß Block 151 kann die vorgegebene Konditionierung 3
- eine Zusammensetzung des Trainings-Bildes *x*₀ aus Objekten, und/oder
- Kanten des Trainings-Bildes *x*₀, und/oder
- sonstige Informationen über das Layout des Trainings-Bildes *x*₀,
umfassen.

Gemäß Block 152 kann die vorgegebene Konditionierung 3 eine Eigenschaft des Trainings-Bildes *x*₀, die von einem zu trainierenden Machine Learning-Modell 8 ermittelt werden soll und für die Vorwissen zum überwachten Training des Machine Learning-Modells 8 vorhanden ist, umfassen. Auf diese Weise können augmentierte Versionen ebendieses Trainings-Bildes *x*₀ erzeugt werden, für die die Labels des Trainings-Bildes *x*₀ weiterverwendet werden können.

In Schritt 160 wird die Übereinstimmung dieser Vorhersagen *x̂*_{*t*-1} mit den jeweils tatsächlichen verrauschten Versionen *x*_{*t*-1} wird mit einer vorgegebenen Kostenfunktion 7 bewertet. Es entsteht eine Bewertung 7a.

In Schritt 170 werden Parameter 1a, die das Verhalten des Diffusionsmodells 1 charakterisieren, auf das Ziel optimiert, dass bei weiterer Verarbeitung von Trainings-Bildern *x*₀ und hieraus erzeugten Samples *xₜ* die Bewertung 7a durch die Kostenfunktion verbessert wird. Der fertig optimierte Zustand der Parameter 1a ist mit dem Bezugszeichen 1a* bezeichnet und legt den fertig trainierten Zustand 1* des Diffusionsmodells 1 fest.

Beim Ziehen 140 der Samples *xₜ,* und/oder bei der Bewertung 160 daraus erzeugter Vorhersagen *x̂*_{*t*-1} durch die Kostenfunktion 7 sind solche Samples *xₜ,* die den Stil des jeweiligen Trainings-Bildes *x*₀ noch erkennen lassen, umso stärker repräsentiert sind, je mehr das jeweilige Trainings-Bild *x*₀ dem vorgegebenen Stil 5 entspricht.

Dies kann insbesondere beispielsweise gemäß Block 141 bzw. 161 bedeuten, dass beim Ziehen 140 der Samples *xₜ,* und/oder bei der Bewertung 160 daraus erzeugter Vorhersagen *x̂*_{*t*-1} durch die Kostenfunktion 7 Samples *xₜ,* die den Stil des jeweiligen Trainings-Bildes *x*₀ noch erkennen lassen, nur berücksichtigt werden, insoweit sie aus Trainings-Bildern *x*₀ aus der gemäß Block 121 gebildeten Richtig-Teilmenge R hervorgegangen sind.

Gemäß Block 142 bzw. 162 kann ein Schwellwert S festgelegt werden, bis zu dem Samples *xₜ* mit *t* ≤ S den Stil des jeweiligen Trainings-Bildes *x*₀ noch erkennen lassen. Um diesen Schwellwert festzulegen, kann insbesondere beispielsweise
- gemäß Block 142a bzw. 162a für mehrere Kandidaten-Schwellwerte *S** getestet werden, ob sich aus Samples *x*_{*S**} der Stil des jeweiligen Trainings-Bildes *x*₀ noch eindeutig ermitteln lässt, und
- gemäß Block 142b bzw. 162b ein Kandidaten-Schwellwert *S*,* für den dies sich als nicht mehr möglich erweist, als Schwellwert S ausgewählt werden.

Gemäß Block 143 bzw. 163 kann
- eine Häufigkeit, mit der solche Samples *xₜ* gezogen werden, die den Stil des jeweiligen Trainings-Bildes *x*₀ noch erkennen lassen, und/oder
- eine Häufigkeit, mit der solche Samples *xₜ* gezogen werden, die auf Trainings-Bilder *x*₀ mit dem vorgegebenen Stil zurückgehen,
so angepasst werden, dass die Iterations-Indizes t der insgesamt gezogenen Samples gemäß einer vorgegebenen Verteilung verteilt sind.

In dem in Figur 1 gezeigten Beispiel werden in Schritt 180 dem trainierten Diffusionsmodell 1 Samples von Rauschen 2 aus einer Rauschverteilung zusammen mit einer vorgegebenen Konditionierung 3 zugeführt. Es entstehen dann synthetisch generierte Bilder 4.

In Schritt 190 wird ein für die Lösung einer vorgegebenen Aufgabe (Task) ausgebildetes Machine Learning-Modell 8 unter Heranziehung der synthetisch generierten Bilder 4 als Trainings-Beispiele trainiert. Der fertig trainierte Zustand dieses Machine Learning-Modells ist mit dem Bezugszeichen 8* bezeichnet.

In Schritt 200 werden dem trainierten Machine Learning-Modell 8* Eingabe-Bilder 9 zugeführt, die mit mindestens einem Sensor aufgenommen wurden. Daraufhin entstehen Ausgaben 8a.

In Schritt 210 wird aus diesen Ausgaben 8a ein Ansteuersignal 210a gebildet. In Schritt 220 wird ein Fahrzeug 50, ein Fahrassistenzsystem 51, ein Roboter 60, ein System 70 zur Qualitätskontrolle, ein System 80 zur Überwachung von Bereichen, und/oder ein System 90 zur medizinischen Bildgebung, mit dem Ansteuersignal 210a angesteuert.

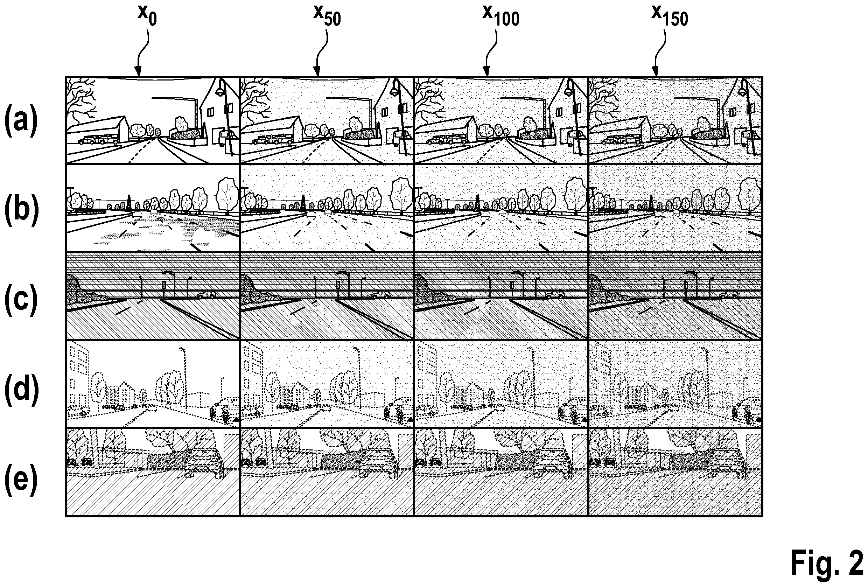

Figur 2 zeigt fünf Beispiele (a) bis (e) von Trainings-Bildern x₀. Diese Trainings-Bilder *x*₀ unterscheiden sich augenscheinlich nicht nur in ihrem jeweiligen Inhalt, sondern auch in ihrem Generierungsstil. So fällt etwa an Beispiel (a) auf, dass das Bild durch einen Fischaugen-Effekt der verwendeten Kamera deutlich verzerrt ist. Die in Beispiel (b) gezeigte Verkehrssituation auf einer Autobahn sieht auf den ersten Blick "zu gut" für ein Foto, und die Textur der Fahrbahn weist Artefakte auf, die typisch für eine synthetische Generierung des Bildes sind. In Beispiel (c) sind Bildbereiche, in denen die Lichtintensität unterhalb eines bestimmten Werts liegt, ganz schwarz. Beispiel (d) zeigt verwaschenen Farbkontrast. Beispiel (e) zeigt Fokusunschärfe, und Bildbereiche, in denen die Lichtintensität oberhalb eines bestimmten Werts liegt, sind ganz weiß.

Zu jedem dieser Trainings-Bilder *x*₀ sind in Figur 2 jeweils verrauschte Versionen *x*₅₀, *x*₁₀₀ und *x*₁₅₀ gezeigt, die nach 50, 100 bzw. 150 sukzessiven Iterationen des Verrauschens entstehen. Dabei bleiben die wesentlichen semantischen Inhalte der Trainings-Bilder *x*₀ selbst nach 150 Iterationen des Verrauschens noch erkennbar. Jedoch werden die Unterschiede im Generierungsstil stark eingeebnet. So fällt beispielsweise der Fischaugen-Effekt von Beispiel (a) kaum noch auf, der Textur-Artefakt in Beispiel (b) ist nicht mehr sichtbar, und auch die Fokusunschärfe in Beispiel (e) ist durch das Rauschen verdeckt. Stärker verrauschte Iterationen *xₜ* können somit von allen Trainings-Bildern *x*₀ verwendet werden, ohne hierdurch das Training des Diffusionsmodell 1 mit einem "falschen" Stil zu "kontaminieren". Schwächer verrauschte Iterationen *xₜ* sollten nur von Trainings-Bildern *x*₀, deren Stil dem vorgegebenen Stil 5 entspricht, verwendet werden.

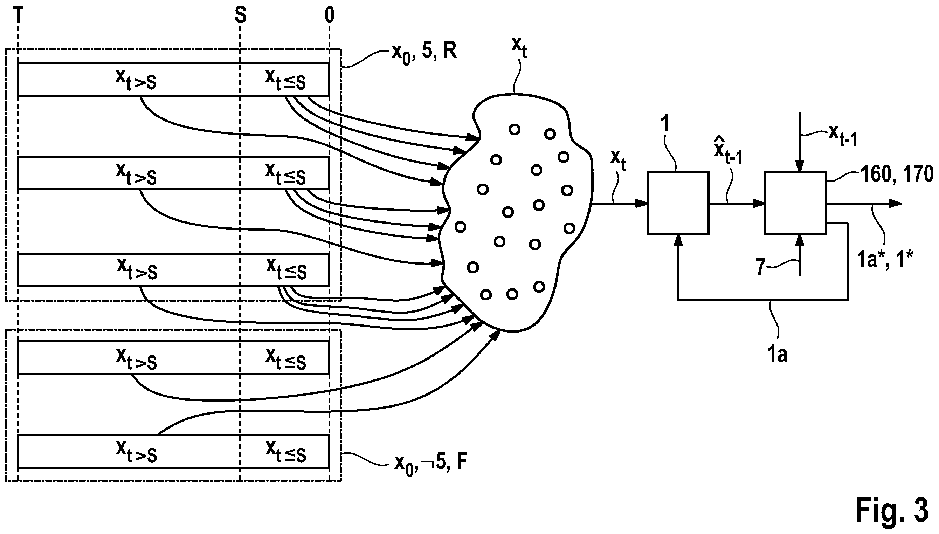

Dies ist in Figur 3 schematisch näher veranschaulicht. In dem in Figur 3 gezeigten Beispiel gibt es drei Trainings-Bilder *x*₀, die dem vorgegebenen Stil 5 entsprechen und somit der in Block 121 gebildeten Richtig-Menge R angehören, und zwei Trainings-Bilder *x*₀, die dem vorgegebenen Stil 5 nicht entsprechen (¬ 5 = "nicht 5") und somit der in Block 121 gebildeten Falsch-Menge F angehören. Alle Trainings-Bilder *x*₀ wurden in T Iterationen verrauscht. Es wurde ein Schwellwert S festgelegt dergestalt, dass verrauschte Iterationen *x*_{*t*>*S*} keine Information über den Generierungsstil des ursprünglichen Trainings-Bildes *x*₀ mehr beinhalten, während verrauschte Iterationen *x*_{*t*≤*S*} diesen Generierungsstil noch erkennen lassen.

Von allen Trainings-Bildern *x*₀ werden jeweils stärker verrauschte Iterationen *x*_{*t*>*S*} berücksichtigt. Jedoch werden schwächer verrauschte Iterationen *x*_{*t*≤*S*} nur berücksichtigt, wenn das jeweilige Trainings-Bild *x*₀ der Richtig-Menge R angehört. Alle gezogenen Samples *xₜ* werden in einem Pool zusammengefasst und dem zu trainierenden Diffusionsmodell 1 zugeführt. Dabei werden für Trainings-Bilder *x*₀ aus der Richtig-Menge R jeweils mehr schwächer verrauschte Samples *x*_{*t*≤*S*} als stärker verrauschte Samples *x*_{*t*>*S*} berücksichtigt, damit die im Pool insgesamt vorhandenen Iterations-Indizes t in etwa gleichverteilt sind.

Das Diffusionsmodell 1 erstellt zu jedem Sample *xₜ* aus dem Pool jeweils eine Vorhersage *x̂*_{*t*-1} für die vorherige, etwas schwächer verrauschte Iteration *x*_{*t-*1}*.* In Schritt 160 des Verfahrens 100 wird diese Vorhersage *x̂*_{*t*-1} mit der tatsächlichen schwächer verrauschten Iteration *x*_{*t*-1} verglichen. Das Ergebnis dieses Vergleichs wird anhand der vorgegebenen Kostenfunktion 7 bewertet, und in Schritt 170 des Verfahrens 100 wird Feedback für die Parameter 1a ermittelt, die das Verhalten des Diffusionsmodells 1 charakterisieren. Es entstehen fertig optimierte Parameter 1a*, die den fertig trainierten Zustand 1* des Diffusionsmodells 1 festlegen.

## Patentansprüche

1. Verfahren (100) zum Trainieren eines Diffusionsmodells (1), das dazu nutzbar ist, aus Rauschen (2) in Verbindung mit einer vorgegebenen Konditionierung (3) in iterativer Weise ein synthetisches Bild (4) zu erzeugen, das im Einklang mit dieser Konditionierung (3) steht, mit den Schritten:
• es wird ein Stil (5) vorgegeben (110), den die synthetisch erzeugten Bilder (4) haben sollen;
• es wird eine Menge von Trainings-Bildern *x*₀ bereitgestellt (120), die in unterschiedlichem Maße dem vorgegebenen Stil (5) entsprechen;
• die Trainings-Bilder *x*₀ werden in einer vorgegebenen Anzahl T von Iterationen sukzessive mit Rauschen (2) beaufschlagt (130), so dass jeweils verrauschte Versionen *x*₁*,*...,*x_{T}* entstehen;
• aus den verrauschten Versionen *x*₁*,*...,*x_{T}* werden Samples *xₜ* gezogen (140);
• die gezogenen Samples *xₜ* werden in Verbindung mit der vorgegebenen Konditionierung (3) von dem Diffusionsmodell (1) zu Vorhersagen *x̂*_{*t*-1} für die jeweils vorherige verrauschte Version *x*_{*t*-1} verarbeitet (150);
• die Übereinstimmung dieser Vorhersagen *x̂*_{*t*-1} mit den jeweils tatsächlichen verrauschten Versionen *x*_{*t*-1} wird mit einer vorgegebenen Kostenfunktion (7) bewertet (160); und
• Parameter (1a), die das Verhalten des Diffusionsmodells (1) charakterisieren, werden auf das Ziel optimiert (170), dass bei weiterer Verarbeitung von Trainings-Bildern *x*₀ und hieraus erzeugten Samples *xₜ* die Bewertung (7a) durch die Kostenfunktion verbessert wird,
wobei beim Ziehen (140) der Samples *xₜ,* und/oder bei der Bewertung (160) daraus erzeugter Vorhersagen *x̂*_{*t*-1} durch die Kostenfunktion (7), solche Samples *xₜ,* die den Stil des jeweiligen Trainings-Bildes *x*₀ noch erkennen lassen, umso stärker repräsentiert sind, je mehr das jeweilige Trainings-Bild *x*₀ dem vorgegebenen Stil (5) entspricht.

2. Verfahren (100) nach Anspruch 1, wobei
• die Menge der Trainings-Bilder *x*₀ in eine Richtig-Teilmenge (R) derjenigen Trainings-Bilder *x*₀, die dem vorgegebenen Stil (5) entsprechen, und eine Falsch-Teilmenge (F) derjenigen Trainings-Bilder *x*₀, die dem vorgegebenen Stil (5) nicht entsprechen, aufgeteilt wird (121) und
• beim Ziehen (140) der Samples *xₜ,* und/oder bei der Bewertung (160) daraus erzeugter Vorhersagen *x̂*_{*t*-1} durch die Kostenfunktion (7) Samples *xₜ,* die den Stil des jeweiligen Trainings-Bildes *x*₀ noch erkennen lassen, nur berücksichtigt werden (141, 161), insoweit sie aus Trainings-Bildern *x*₀ aus der Richtig-Teilmenge (R) hervorgegangen sind.

3. Verfahren (100) nach einem der Ansprüche 1 bis 2, wobei ein Schwellwert S festgelegt wird (142, 162), bis zu dem Samples *xₜ* mit *t* ≤ S den Stil des jeweiligen Trainings-Bildes *x*₀ noch erkennen lassen.

4. Verfahren (100) nach Anspruch 3, wobei
• für mehrere Kandidaten-Schwellwerte *S** getestet wird (142a, 162a), ob sich aus Samples *x*_{*S**} der Stil des jeweiligen Trainings-Bildes *x*₀ noch eindeutig ermitteln lässt, und
• ein Kandidaten-Schwellwert *S*,* für den dies sich als nicht mehr möglich erweist, als Schwellwert S ausgewählt wird (142b, 162b).

5. Verfahren (100) nach einem der Ansprüche 1 bis 4, wobei der vorgegebene Stil 5 eine Übertragungsfunktion charakterisiert (111), die den semantischen Inhalt eines Bildes in das Bild übersetzt.

6. Verfahren (100) nach einem der Ansprüche 1 bis 5, wobei der vorgegebene Stil 5 eine Vorrichtung, mit der ein Bild aufgenommen wurde, und/oder einen Algorithmus, mit dem ein Bild synthetisch generiert wurde, charakterisiert (112).

7. Verfahren (100) nach einem der Ansprüche 1 bis 6, wobei der vorgegebene Stil 5
• eine Bildverzerrung, und/oder
• Fokusunschärfe, und/oder
• eine Farbgebung und/oder einen Farbstich, und/oder
• eine oder mehrere Texturen, und/oder
• einen oder mehrere bei der Erzeugung des Trainings-Bildes *x*₀ aufgetretene Artefakte
umfasst (113).

8. Verfahren (100) nach einem der Ansprüche 1 bis 7, wobei
• eine Häufigkeit, mit der solche Samples *xₜ* gezogen werden, die den Stil des jeweiligen Trainings-Bildes *x*₀ noch erkennen lassen, und/oder
• eine Häufigkeit, mit der solche Samples *xₜ* gezogen werden, die auf Trainings-Bilder *x*₀ mit dem vorgegebenen Stil zurückgehen,
so angepasst wird (143, 163), dass die Iterations-Indizes t der insgesamt gezogenen Samples gemäß einer vorgegebenen Verteilung verteilt sind.

9. Verfahren (100) nach einem der Ansprüche 1 bis 8, wobei die vorgegebene Konditionierung (3)
• eine Zusammensetzung des Trainings-Bildes *x*₀ aus Objekten, und/oder
• Kanten des Trainings-Bildes *x*₀, und/oder
• sonstige Informationen über das Layout des Trainings-Bildes *x*₀,
umfasst (151).

10. Verfahren (100) nach einem der Ansprüche 1 bis 9, wobei die vorgegebene Konditionierung (3) eine Eigenschaft des Trainings-Bildes *x*₀, die von einem zu trainierenden Machine Learning-Modell (8) ermittelt werden soll und für die Vorwissen zum überwachten Training des Machine Learning-Modells (8) vorhanden ist, umfasst (152).

11. Verfahren (100) nach einem der Ansprüche 1 bis 9, wobei dem trainierten Diffusionsmodell (1) Samples von Rauschen (2) aus einer Rauschverteilung zusammen mit einer vorgegebenen Konditionierung (3) zugeführt werden (180), so dass synthetisch generierte Bilder (4) entstehen.

12. Verfahren (100) nach Anspruch 11, wobei ein Machine Learning-Modell (8) unter Heranziehung der synthetisch generierten Bilder 4 als Trainings-Beispiele trainiert wird (190).

13. Verfahren (100) nach Anspruch 12, wobei
• dem trainierten Machine Learning-Modell (8*) Eingabe-Bilder (9) zugeführt werden (200), die mit mindestens einem Sensor (10) aufgenommen wurden;
• aus der daraufhin vom Machine Learning-Modell (8*) gelieferten Ausgabe (8a) ein Ansteuersignal (210a) gebildet wird (210); und
• ein Fahrzeug (50), ein Fahrassistenzsystem (51), ein Roboter (60), ein System (70) zur Qualitätskontrolle, ein System (80) zur Überwachung von Bereichen, und/oder ein System (90) zur medizinischen Bildgebung, mit dem Ansteuersignal (210a) angesteuert wird (220).

14. Computerprogramm, enthaltend maschinenlesbare Anweisungen, die, wenn sie auf einem oder mehreren Computern und/oder Compute-Instanzen ausgeführt werden, den oder die Computer und/oder Compute-Instanzen dazu veranlassen, das Verfahren (100) nach einem der Ansprüche 1 bis 13 auszuführen.

15. Maschinenlesbarer Datenträger und/oder Downloadprodukt mit dem Computerprogramm nach Anspruch 14.

16. Ein oder mehrere Computer und/oder Compute-Instanzen mit dem Computerprogramm nach Anspruch 14, und/oder mit dem maschinenlesbaren Datenträger und/oder Downloadprodukt nach Anspruch 15.

## Geänderte Patentansprüche

### Geänderte Patentansprüche gemäss Regel 137(2) EPÜ.

1. Verfahren (100) zum Trainieren eines Machine Learning-Modells (8), wobei das Machine Learning-Modell (8) unter Heranziehung synthetisch generierter Bilder (4) als Trainings-Beispiele trainiert wird (190), wobei einem trainierten Diffusionsmodell (1) Samples von Rauschen (2) aus einer Rauschverteilung zusammen mit einer vorgegebenen Konditionierung (3) zugeführt werden (180), so dass die synthetisch generierten Bilder (4) entstehen, wobei das Verfahren ein Trainieren des Diffusionsmodells (1) mit den folgenden Schritten umfasst:
• es wird ein Stil (5) vorgegeben (110), den die synthetisch erzeugten Bilder (4) haben sollen;
• es wird eine Menge von Trainings-Bildern *x*₀ bereitgestellt (120), die in unterschiedlichem Maße dem vorgegebenen Stil (5) entsprechen;
• die Trainings-Bilder *x*₀ werden in einer vorgegebenen Anzahl T von Iterationen sukzessive mit Rauschen (2) beaufschlagt (130), so dass jeweils verrauschte Versionen *x*₁,...,*x_{T}* entstehen;
• aus den verrauschten Versionen *x*₁,...,*x_{T}* werden Samples *xₜ* gezogen (140);
• die gezogenen Samples *xₜ* werden in Verbindung mit der vorgegebenen Konditionierung (3) von dem Diffusionsmodell (1) zu Vorhersagen *x̂*ₜ₋₁ für die jeweils vorherige verrauschte Version *x*_{*t-*1} verarbeitet (150);
• die Übereinstimmung dieser Vorhersagen *x̂*ₜ₋₁ mit den jeweils tatsächlichen verrauschten Versionen *x*_{*t-*1} wird mit einer vorgegebenen Kostenfunktion (7) bewertet (160); und
• Parameter (1a), die das Verhalten des Diffusionsmodells (1) charakterisieren, werden auf das Ziel optimiert (170), dass bei weiterer Verarbeitung von Trainings-Bildern *x*₀ und hieraus erzeugten Samples *xₜ* die Bewertung (7a) durch die Kostenfunktion verbessert wird,
**gekennzeichnet dadurch, dass** beim Ziehen (140) der Samples *xₜ*, und/oder bei der Bewertung (160) daraus erzeugter Vorhersagen *x̂*ₜ₋₁ durch die Kostenfunktion (7), solche Samples *xₜ*, die den Stil des jeweiligen Trainings-Bildes *x*₀ noch erkennen lassen, umso stärker repräsentiert sind, je mehr das jeweilige Trainings-Bild *x*₀ dem vorgegebenen Stil (5) entspricht.

2. Verfahren (100) nach Anspruch 1, wobei
• die Menge der Trainings-Bilder *x*₀ in eine Richtig-Teilmenge (R) derjenigen Trainings-Bilder *x*₀, die dem vorgegebenen Stil (5) entsprechen, und eine Falsch-Teilmenge (F) derjenigen Trainings-Bilder *x*₀, die dem vorgegebenen Stil (5) nicht entsprechen, aufgeteilt wird (121) und
• beim Ziehen (140) der Samples *xₜ*, und/oder bei der Bewertung (160) daraus erzeugter Vorhersagen *x̂*ₜ₋₁ durch die Kostenfunktion (7) Samples *xₜ*, die den Stil des jeweiligen Trainings-Bildes *x*₀ noch erkennen lassen, nur berücksichtigt werden (141, 161), insoweit sie aus Trainings-Bildern *x*₀ aus der Richtig-Teilmenge (R) hervorgegangen sind.

3. Verfahren (100) nach einem der Ansprüche 1 bis 2, wobei ein Schwellwert *S* festgelegt wird (142, 162), bis zu dem Samples *xₜ* mit t ≤ *S* den Stil des jeweiligen Trainings-Bildes *x*₀ noch erkennen lassen.

4. Verfahren (100) nach Anspruch 3, wobei
• für mehrere Kandidaten-Schwellwerte *S** getestet wird (142a, 162a), ob sich aus Samples *x*_{*s**} der Stil des jeweiligen Trainings-Bildes *x*₀ noch eindeutig ermitteln lässt, und
• ein Kandidaten-Schwellwert *S*,* für den dies sich als nicht mehr möglich erweist, als Schwellwert *S* ausgewählt wird (142b, 162b).

5. Verfahren (100) nach einem der Ansprüche 1 bis 4, wobei der vorgegebene Stil 5 eine Übertragungsfunktion charakterisiert (111), die den semantischen Inhalt eines Bildes in das Bild übersetzt.

6. Verfahren (100) nach einem der Ansprüche 1 bis 5, wobei der vorgegebene Stil 5 eine Vorrichtung, mit der ein Bild aufgenommen wurde, und/oder einen Algorithmus, mit dem ein Bild synthetisch generiert wurde, charakterisiert (112).

7. Verfahren (100) nach einem der Ansprüche 1 bis 6, wobei der vorgegebene Stil 5
• eine Bildverzerrung, und/oder
• Fokusunschärfe, und/oder
• eine Farbgebung und/oder einen Farbstich, und/oder
• eine oder mehrere Texturen, und/oder
• einen oder mehrere bei der Erzeugung des Trainings-Bildes *x*₀ aufgetretene Artefakte
umfasst (113).

8. Verfahren (100) nach einem der Ansprüche 1 bis 7, wobei
• eine Häufigkeit, mit der solche Samples *xₜ* gezogen werden, die den Stil des jeweiligen Trainings-Bildes *x*₀ noch erkennen lassen, und/oder
• eine Häufigkeit, mit der solche Samples *xₜ* gezogen werden, die auf Trainings-Bilder *x*₀ mit dem vorgegebenen Stil zurückgehen,
so angepasst wird (143, 163), dass die Iterations-Indizes t der insgesamt gezogenen Samples gemäß einer vorgegebenen Verteilung verteilt sind.

9. Verfahren (100) nach einem der Ansprüche 1 bis 8, wobei die vorgegebene Konditionierung (3)
• eine Zusammensetzung des Trainings-Bildes *x*₀ aus Objekten, und/oder
• Kanten des Trainings-Bildes *x*₀, und/oder
• sonstige Informationen über das Layout des Trainings-Bildes *x*₀,
umfasst (151).

10. Verfahren (100) nach einem der Ansprüche 1 bis 9, wobei die vorgegebene Konditionierung (3) eine Eigenschaft des Trainings-Bildes *x*₀, die von einem zu trainierenden Machine Learning-Modell (8) ermittelt werden soll und für die Vorwissen zum überwachten Training des Machine Learning-Modells (8) vorhanden ist, umfasst (152).

11. Verfahren (100) nach einem der Ansprüche 1 bis 9, wobei
• dem trainierten Machine Learning-Modell (8*) Eingabe-Bilder (9) zugeführt werden (200), die mit mindestens einem Sensor (10) aufgenommen wurden;
• aus der daraufhin vom Machine Learning-Modell (8*) gelieferten Ausgabe (8a) ein Ansteuersignal (210a) gebildet wird (210); und
• ein Fahrzeug (50), ein Fahrassistenzsystem (51), ein Roboter (60), ein System (70) zur Qualitätskontrolle, ein System (80) zur Überwachung von Bereichen, und/oder ein System (90) zur medizinischen Bildgebung, mit dem Ansteuersignal (210a) angesteuert wird (220).

12. Computerprogramm, enthaltend maschinenlesbare Anweisungen, die, wenn sie auf einem oder mehreren Computern und/oder Compute-Instanzen ausgeführt werden, den oder die Computer und/oder Compute-Instanzen dazu veranlassen, das Verfahren (100) nach einem der Ansprüche 1 bis 11 auszuführen.

13. Maschinenlesbarer Datenträger und/oder Downloadprodukt mit dem Computerprogramm nach Anspruch 12.

14. Ein oder mehrere Computer und/oder Compute-Instanzen mit dem Computerprogramm nach Anspruch 12, und/oder mit dem maschinenlesbaren Datenträger und/oder Downloadprodukt nach Anspruch 13.
